(19)

**Europäisches Patentamt**

**European Patent Office**

**Office européen des brevets**

(11) **EP 4 060 887 B1**

(12) **EUROPEAN PATENT SPECIFICATION**

(45) Date of publication and mention
of the grant of the patent:
**09.08.2023 Bulletin 2023/32**

(21) Application number: **21163025.6**

(22) Date of filing: **17.03.2021**

(51) International Patent Classification (IPC):
**H02M 3/335** *(2006.01)*

(52) Cooperative Patent Classification (CPC):
**H02M 3/33523; H02H 9/02; H02M 3/33507;
H05B 45/36; H05B 45/50; H05B 47/18;** H02H 9/04

(54) **COST AND SIZE OPTIMIZED DALI POWER SUPPLY**

KOSTEN- UND GRÖSSENOPTIMIERTE DALI-STROMVERSORGUNG

ALIMENTATION ÉLECTRIQUE DALI OPTIMISÉE EN TERMES DE COÛT ET DE TAILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.09.2022 Bulletin 2022/38**

(73) Proprietor: **Tridonic GmbH & Co. KG
6851 Dornbirn (AT)**

(72) Inventors:
• **Schertler, Markus
6850 Dornbirn (AT)**

• **Diez, Nikolaus
6850 Dornbirn (AT)**
• **Moosbrugger, Markus
6850 Dornbirn (AT)**

(74) Representative: **Rupp, Christian
Mitscherlich PartmbB
Patent- und Rechtsanwälte
Karlstraße 7
80333 München (DE)**

(56) References cited:
**US-A1- 2010 002 480     US-A1- 2012 153 858
US-A1- 2013 063 039     US-A1- 2014 132 179**

## Description

## Technical Field

The present disclosure relates to lighting technology, and in particular to a power supply for a lighting control bus.

## Background Art

Power supplies in conformity with the Digital Addressable Lighting Interface (DALI) specifications require "basic isolation" for protection of users from electric shocks. Such power supplies are usually based on the Flyback concept, which subdivides the power supply into inductively coupled primary and secondary sides separated by a galvanic isolation barrier. Flyback converters comprise a switch on the primary side for controlling a duration of an ON period of a switching cycle of the switch, which in turn determines a primary side peak current. A regulation of the secondary side (i.e., output) voltage normally involves a secondary side voltage measurement. However, a communication of the measurement result across the isolation barrier to the control circuit is expensive. Besides, an output voltage drift is considerable due to factors such as inductive coupling, converter efficiency, temperature drift etc.

Being a constant current source at maximum load, higher output voltages thus lead to higher power losses within power supply.

US 2010/0002480 A1 discloses a power supply suitable for a lighting control bus comprising, inter alia, a control circuit configured to control, in a first conduction mode of a switch of the power supply, a duty cycle of the switch in dependence of a variation of an output voltage of the power supply measured on the primary side, and configured to adjust, in a second conduction mode of the switch, a duration of a switching cycle of the switch in dependence of a variation of the output voltage of the power supply measured on the primary side.

US 2013/063039 A1 discloses a power supply suitable for a lighting control bus comprising, inter alia, a control circuit configured to control, in a first conduction mode of a switch of the power supply, a duty cycle of the switch in dependence of a variation of an output current of the power supply measured on the primary side.

## Summary

The present disclosure thus seeks to provide a cost and size optimized power supply for a lighting control bus.

The invention is defined by the appended independent claims. Preferred embodiments are set forth in the dependent claims and in the following description and drawings.

The present disclosure relates to a power supply for a lighting control bus. The power supply comprises: an isolated power converter configured to inductively supply power from a primary side of the converter to a secondary side of the converter. The secondary side comprises output terminals connectable to the lighting control bus. The primary side comprises a switch, and a control circuit configured to control, in a first conduction mode of the switch, a duty cycle of the switch in dependence of a variation of an output voltage of the power supply measured on the primary side, and configured to adjust, in a second conduction mode of the switch, a duration of the switching period of the switch in dependence of a variation of an average output current of the power supply measured on the primary side.

The control circuit may further be configured to adjust a reference value of the output voltage of the power supply in dependence of an estimated output power of the power supply.

The control circuit may further be configured to estimate the output power of the power supply in dependence of an actual value of the output voltage of the power supply and an actual value of an input current of the power supply.

The control circuit may further be configured to measure the actual value of the output voltage of the power supply in accordance with a first measurement on the primary side.

The primary side may further comprise a series connection of a diode and a capacitor arranged in parallel to the switch; and a low-pass filter connected downstream of a midpoint between the diode and the capacitor and upstream of the control circuit. The control circuit may further be configured to measure an average peak voltage dropping across the capacitor when the switch is in a non-conducting state. The average peak voltage may be indicative of the actual value of the output voltage of the power supply.

The control circuit may further be configured to measure the actual value of the input current of the power supply in accordance with a second measurement on the primary side.

The primary side may further comprise a shunt connected downstream of the switch. The control circuit may further be configured to measure a voltage dropping across the shunt when the switch is in a conducting state, the voltage being indicative of the actual value of the output current of the power supply.

The control circuit may further be configured to measure a zero-crossing of the output current of the power supply in accordance with a third measurement on the primary side.

The control circuit may further be configured to measure a zero-crossing of the voltage dropping across the shunt when the switch is in a conducting state, the zero-crossing of the voltage being indicative of the zero-crossing of the output current of the power supply.

The control circuit may further be configured to perform a transition of a conduction mode of the switch between the first conduction mode and the second conduction mode in dependence of the estimated output power of the power supply.

The control circuit may further be configured to adjust a peak amplitude of a primary-side current passing through the switch when the switch is in a conducting state in dependence of the estimated output power of the power supply, the peak amplitude being indicative of the average output current of the power supply.

The isolated power converter may comprise a Flyback converter, and/or the switch may comprise a MOSFET.

The first conduction mode may comprise a discontinuous conduction mode, and the second conduction mode may comprise a boundary/borderline conduction mode.

The secondary side may further comprise an overcurrent protection for limiting the output current to a nominal value in case of a short-circuit of the output terminals, and/or an overvoltage protection.

## Advantageous Effects

The present invention provides a power supply for a lighting control bus which

- by primary-side output voltage measurement, reduces cost relative to the normal secondary-side output voltage measurement (e.g. based on auxiliary transformer winding etc.),
- by a peak hold circuit for voltage measurement, eliminates the need of a triggered measurement at a certain time,
- by filtering parasitics and signal overshoot of the primary-side output voltage measurement, further reduces cost (the control circuit may not need to support an exact signal triggering),
- by load-dependent compensation of the output voltage drift further reduces cost (the current source final losses can be kept small),
- by load-dependent DCM / BCM transitions, further reduces cost (as the BCM mode entails smaller transformers and the Flyback can be fully utilized in terms of power, the converter design and in particular the transformer size may be minimized), and
- by adjustment of the primary-side peak current amplitude, maintains nearly constant power upon transitions between DCM and BCM.

## Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

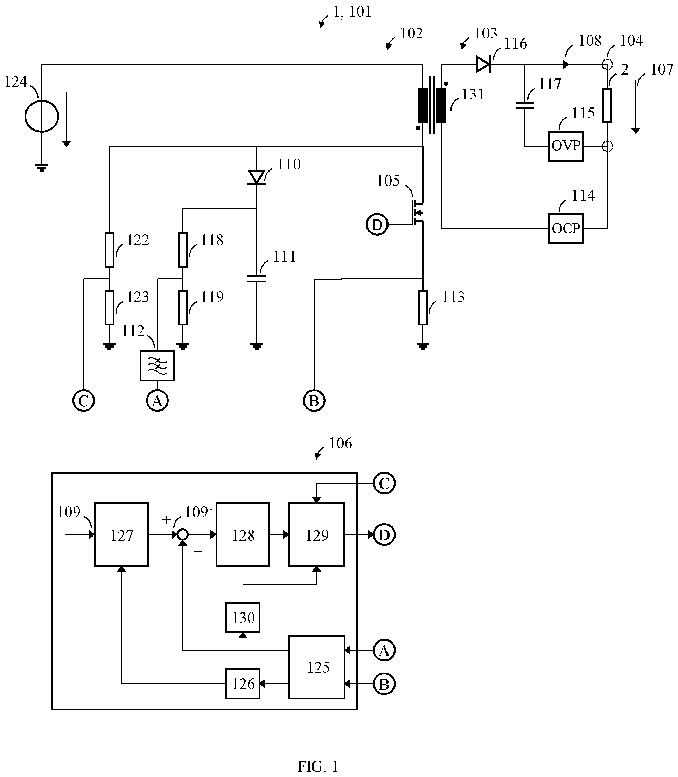

FIG. 1 illustrates a power supply for a lighting control bus in accordance with the present disclosure.

## Detailed Descriptions of Drawings

In FIG. 1, the illustrated power supply 1 comprises an isolated power converter 101 configured to inductively supply power from a primary side 102 of the converter to a secondary side 103 of the converter 101. In particular, the isolated power converter 101 may comprise a Flyback converter. The inductive coupling may be realized by a transformer 131, which comprises a coupled inductor with a gapped core.

The secondary side 103 comprises output terminals 104 connectable to the lighting control bus 2, such as a Digital Addressable Lighting Interface (DALI) bus, a rectifying diode 116 and a smoothing capacitor 117.

"DALI" as used herein may refer to a series of technical standards (IEC 62386) specifying requirements for networking-enabled products of lighting control.

The secondary side 103 may further comprise an overcurrent protection (OCP) 114 for limiting an output current 108 to a nominal value in case of a short-circuit of the output terminals 104, and/or an overvoltage protection (OVP) 115. For example, an OCP may be realized based on a shunt regulator, and an OVP may be implemented using a Zener diode.

The primary side 102 comprises a switch 105, such as a Metal Oxide Semiconductor Field Effect Transistor (MOSFET) or a bipolar transistor.

The switch 105 is operated cyclically. During each switching cycle, the switch 105 alternates between an ON period (i.e., the switch 105 is closed/conducting) of duration $T_{ON}$ and an OFF period of duration $T_{OFF}$. In other words, the switch 105 is operable in accordance with a duty cycle $D = T_{ON} / (T_{ON} + T_{OFF}) = T_{ON} / T$, where $T = T_{ON} + T_{OFF}$ represents a duration of the switching cycle.

A duty cycle as used herein is a fraction of a (recurring) period, such as the duration $T$ of the switching cycle, in which a switch is active/conductive/closed/ON.

During each ON period, an input voltage (such as 12 V DC) supplied by a voltage source 124 is applied to a primary winding of the transformer 131, and energy is stored in the gap of the core. The combination of winding polarity (identified by the polarity dots) biases the diode 116 in a reverse direction to ensure that no energy is transferred to the secondary side 103. In this portion of the switching cycle, a primary side current ramps up over time to store energy. During the OFF period following each ON period, this energy is transferred to a secondary winding of the transformer 131 to provide energy to a load, such as the lighting control bus 2, which is represented as a resistor in FIG. 1. When the switch 105 is opened, the output current 108 is at its peak and ramps downward as the stored energy is transferred to the load.

The switch 105 may further be operated in one of a first conduction mode, such as a discontinuous conduction mode (DCM), and a second conduction mode, such as a boundary/borderline conduction mode (BCM).

DCM and a BCM as used herein may refer to modes of operation of a power converter wherein an energy stored in an energy storage element (inductor) of the power converter is fully depleted in each switching cycle.

The Flyback converter supplies an output voltage $V_{out}$, 107 in dependence of the input voltage $Vin$, a number of turns $N_s$ of the secondary winding, a number of turns $N_p$ of the primary winding and the afore-mentioned duty cycle D according to:

$$V_{out} = V_{in} \cdot \frac{N_s}{N_p} \cdot \frac{D}{1-D}$$

Given constant input voltage $Vin$ and numbers of turns $N_s$, $N_p$, it is evident that the output voltage $V_{out}$, 107 may be controlled by the duty cycle $D$, or its constituents, i.e., the duration $T_{ON}$ of the ON period and the duration $T$ of the switching cycle, respectively.

The primary side 102 further comprises a control circuit 106 configured to control, in the first conduction mode (DCM) of the switch 105, the duty cycle $D$ of the switch 105 in dependence of a variation of the output voltage $V_{out}$, 107 of the power supply 1 measured on the primary side 102, and configured to adjust, in the second conduction mode (BCM) of the switch 105, the duration $T$ of the switching cycle of the switch 105 in dependence of a variation of the average input current of the power supply 1 measured on the primary side 102.

It should be noted that all the measurements are provided for on the primary side 102, i.e., in colocation with the control circuit 106.

For regulation purposes, the control circuit 106 may in particular comprise a controller 128, such as a PID controller, and a PWM signal generator 129 for generating a pulse-with modulation (PWM) drive signal (represented as D in FIG. 1) for the switch 105 in accordance with the duty cycle $D$ and/or the duration $T$ of the switching cycle.

The control circuit 106 may further be configured to measure a quantity $V_{sense}$ indicative of the actual value of the output voltage 107, $V_{out}$ of the power supply 1 in accordance with a first measurement A on the primary side 102.

To this end, the primary side 102 may further comprise a series connection of a diode 110 and a capacitor 111 arranged in parallel to the switch 105. The diode 110 and the capacitor 111 constitute a "peak tracker" (in fact a peak hold with average function) of the secondary side / output voltage 107, $V_{out}$ implemented on

the primary side 102. This means that regulation of the secondary side / output voltage 107, $V_{out}$ takes place without measurement effort on the secondary side 103. A potential of a midpoint between the diode 110 and the capacitor 111 is tapped by a voltage divider 118, 119. In turn, a low-pass filter 112 is connected downstream of a midpoint of the voltage divider 118, 119, and thus downstream of the midpoint between the diode 110 and the capacitor 111, and upstream of the control circuit 106. Based on this additional circuitry, the control circuit 106 may further be configured to measure an average peak voltage dropping across the capacitor 111 when the switch 105 is in a non-conducting state. This average peak voltage may be indicative of the actual value of the output voltage 107, $V_{out}$ of the power supply 1, and may be provided to the control circuit 106 as the first measurement A.

In other words, when the switch 105 is OFF, the secondary side / output voltage 107, $V_{out}$ is reflected to the primary side midpoint voltage (drain-source voltage of the switch 105).

The control circuit 106 may further be configured to measure a quantity $I_{sense}$ indicative of the actual value of the input current of the power supply 1 in accordance with a second measurement $B$ on the primary side 102.

To this end, the primary side 102 may further comprise a shunt resistor 113 connected downstream of the switch 105. A potential of a midpoint between the switch 105 and the shunt 113 is tapped and provided to the control circuit 106. Based on the tapped potential, the control circuit 106 may further be configured to measure a voltage dropping across the shunt 113 when the switch 105 is in a conducting state. This voltage may be indicative of the actual value of the input current of the power supply 1, and may be provided to the control circuit 106 as the second measurement $B$.

The control circuit 106 may further be configured to adjust a reference value 109 of the output voltage 107 of the power supply 1 in dependence of an estimated output power $P_{out}$ of the power supply 1, and to estimate the output power $P_{out}$ of the power supply 1 in dependence of actual values of the output voltage 107, $V_{out}$ and the input current of the power supply 1. More specifically, the quantities $V_{sense}$, $I_{sense}$ indicative of the actual values of the output voltage 107, $V_{out}$ and the input current may be determined in accordance with the explanations above. An analog/digital conversion (ADC) unit 125 of the control circuit 106 may receive these quantities, and a power estimation unit 126 of the control circuit 106 may multiply these quantities to estimate the output power $P_{out}$.

Variations of this estimated output power $P_{out}$ reflect a load-dependent drift of the output voltage 107, $V_{out}$. The load dependence of the output voltage 107, $V_{out}$ may be compensated for by an opposite load-dependent adjustment of the reference value 109 of the output voltage 107. In simple terms, the reference value 109 of the output voltage 107, $V_{out}$ is made load-dependent. To this end, a compensation function 127 may be provided, which may be realized as a lookup table, for example. Thus, an adjusted reference value 109' may be retrieved/obtained as a function of the nominal reference value 109 and the output power $P_{out}$ estimated by the power estimation unit 126. Accordingly, the output voltage 107, $V_{out}$ can be kept stable, even though the first and second measurements $A$, $B$ are made on the primary side 102 of the power converter 101.

The usually utilized DCM leads to relatively large transformer sizes. This is because of the inductance tolerance of the transformer 131. For example, small inductances and air gaps are subject to high tolerance (approx. 15% up to 25%). In order to achieve a theoretical maximum of the duration $T_{on}$ (on-time) of the switching cycle in the DCM and to avoid the higher losses of a CCM, the converter design has to reflect reserves (i.e., a large safety margin) which do not allow for an optimization for smallest size.. This means that the transformer 131 must be designed larger than theoretically required. This can be overcome by a load-dependent BCM to DCM mode transition.

CCM as used herein may refer to a mode of operation of the power converter wherein the energy stored in the energy storage element of the power converter is not fully depleted in each switching cycle.

To this end, the control circuit 106 may further comprise a mode switching unit 130 configured to toggle between the first conduction mode (DCM) and the second conduction mode (BCM) in dependence of the output power $P_{out}$ of the power supply 1. The control circuit 106 may further be configured to measure a zero-crossing of the input current of the power supply 1 in accordance with a third measurement C on the primary side 102.

In particular, a zero-crossing of the input current indicates an absence of CCM, as the input current has ramped down to zero from its peak current during the OFF-period of the switching cycle of the switch 105, whose duration $T_{OFF} = T - T_{ON}$ in turn depends on the duration $T_{ON}$ of the ON-period. When a power demand of the load increases further, at some point a maximum duration $T$ of the switching cycle in DCM operation is reached. For example, if zero-crossings of the input current ensue, it may be concluded that a DCM operation has ended and a CCM operation is about to start. At this point, a mode switching from DCM to BCM may be made, according to which a duration of the switching cycle (and thus a duration of the switching period $T = 1 / f$) is varied in dependence of the power demand of the load.

The control circuit 106 may further be configured to measure a zero-crossing of the voltage dropping across the shunt 113 when the switch 105 is in a conducting state. This zero-crossing of the voltage may be indicative of the zero-crossing of the input current of the power supply 1. The primary side 102 may further comprise a voltage divider 122, 123, which taps a potential of a midpoint between the primary winding of the transformer 131 and the switch 105. In turn, a potential of a midpoint of the voltage divider 122, 123 may be provided to the control circuit 106 as the third measurement C.

Thus, the control circuit 106 may further be configured to perform a transition of a conduction mode of the switch 105 between the first conduction mode and the second conduction mode in dependence of the estimated output power $P_{out}$ of the power supply 1. In this connection, measuring a zero-crossing of the input current is a requirement for the second conduction mode, and the estimated output power $P_{out}$ of the power supply 1 may be compared with reference value, such as a power threshold.

When a transition from DCM to BCM (or vice versa) occurs, this may result in output power over- or undershoots due to a changing working frequency $f = 1 / T$ of the switch 105 during mode change. This may be compensated for by an opposite adjustment of the peak amplitude of the input current. To this end, the control circuit 106 may further be configured to adjust a peak amplitude of a primary-side current passing through the switch 105 when the switch 105 is in a conducting state in dependence of the estimated output power of the power supply 1. This peak amplitude is indicative of the average output current 108, $I_{out}$ of the power supply 1. As a result, the output power may virtually be maintained constant when switching between DCM and BCM.

## Claims

1. A power supply (1) for a lighting control bus (2), comprising

an isolated power converter (101) configured to inductively supply power from a primary side (102) of the converter to a secondary side (103) of the converter (101);
the secondary side (103) comprising output terminals (104) connectable to the lighting control bus (2);
the primary side (102) comprising

a switch (105); and
a control circuit (106)

configured to control, in a first conduction mode of the switch (105), a duty cycle of the switch (105) in dependence of a variation of an output voltage (107) of the power supply (1) measured on the primary side (102), and
configured to adjust, in a second conduction mode of the switch (105), a duration of a switching cycle of the switch (105) in dependence of a variation of an average output current (108) of the power supply (1) measured on the primary side (102).

2. The power supply (1) of claim 1,
the control circuit (106) further configured to
adjust a reference value (109) of the output voltage (107) of the power supply (1) in dependence of an estimated output power of the power supply (1).

3. The power supply (1) of claim 2,
the control circuit (106) further configured to
estimate the output power of the power supply (1) in dependence of

> an actual value of the output voltage (107, $V_{out}$) of the power supply (1) and
> an actual value of an input current of the power supply (1).

4. The power supply (1) of claim 3,
the control circuit (106) configured to
measure the actual value of the output voltage (107, $V_{out}$) of the power supply (1) in accordance with a first measurement (C) on the primary side (102).

5. The power supply (1) of claim 4,

> the primary side (102) further comprising

> > a series connection of a diode (110) and a capacitor (111) arranged in parallel to the switch (105); and
> > a low-pass filter (112) connected downstream of a midpoint between the diode (110) and the capacitor (111) and upstream of the control circuit (106);

> the control circuit (106) further configured to measure an average peak voltage dropping across the capacitor (111) when the switch (105) is in a non-conducting state, the average peak voltage being indicative of the actual value of the output voltage (107, $V_{out}$) of the power supply (1).

6. The power supply (1) of any one of the claims 3 to 5,
the control circuit (106) configured to
measure the actual value of the input current of the power supply (1) in accordance with a second measurement (B) on the primary side (102).

7. The power supply (1) of claim 6,

> the primary side (102) further comprising
> a shunt (113) connected downstream of the switch (105); and
> the control circuit (106) further configured to measure a voltage dropping across the shunt (113) when the switch (105) is in a conducting state, the voltage being indicative of the actual value of the output current (108, $I_{out}$) of the power supply (1).

8. The power supply (1) of claim 7,
the control circuit (106) configured to
measure a zero-crossing of the input current of the power supply (1) in accordance with a third measurement (D) on the primary side (102).

9. The power supply (1) of claim 8,
the control circuit (106) further configured to
measure a zero-crossing of the voltage dropping across the shunt (113) when the switch (105) is in a conducting state, the zero-crossing of the voltage being indicative of the zero-crossing of the input current of the power supply (1).

10. The power supply (1) of claim 9,
the control circuit (106) further configured to
perform a transition of a conduction mode of the switch (105) between the first conduction mode and the second conduction mode in dependence of the estimated output power of the power supply (1).

11. The power supply (1) of claim 10,
the control circuit (106) further configured to
adjust a peak amplitude of a primary-side current passing through the switch (105) when the switch (105) is in a conducting state in dependence of the estimated output power of the power supply (1), the peak amplitude being indicative of the average output current (108, $I_{out}$) of the power supply (1).

12. The power supply (1) of any one of the preceding claims,

> the isolated power converter (101) comprising a Flyback converter, and/or
> the switch (105) comprising a MOSFET.

13. The power supply (1) of any one of the preceding claims,

> the first conduction mode comprising a discontinuous conduction mode (DCM), and
> the second conduction mode comprising a boundary/borderline conduction mode (BCM).

14. The power supply (1) of any one of the preceding claims,
the secondary side (103) further comprising

> an overcurrent protection (114, OCP) for limiting the output current (108) to a nominal value in case of a short-circuit of the output terminals (104), and/or
> an overvoltage protection (115, OVP).

**Patentansprüche**

1. Leistungszufuhr (1) für einen Beleuchtungssteuerbus (2), umfassend

   einen isolierten Leistungswandler (101), der konfiguriert ist, um Leistung von einer Primärseite (102) des Wandlers zu einer Sekundärseite (103) des Wandlers (101) induktiv zuzuführen;
   die Sekundärseite (103) umfassend Ausgangsanschlüsse (104), die mit dem Beleuchtungssteuerbus (2) schaltbar sind;
   die Primärseite (102) umfassend
   einen Schalter (105); und
   eine Steuerschaltung (106),
   die konfiguriert ist, um, in einem ersten Leitungsmodus des Schalters (105), einen Arbeitszyklus des Schalters (105) in Abhängigkeit von einer Variation einer Ausgangsspannung (107) der Leistungszufuhr (1), gemessen auf der Primärseite (102), zu steuern, und
   die konfiguriert ist, um, in einem zweiten Leitungsmodus des Schalters (105), eine Dauer eines Schaltzyklus des Schalters (105) in Abhängigkeit von einer Variation einer durchschnittlichen Ausgangsleistung (108) der Leistungszufuhr (1), gemessen auf der Primärseite (102), anzupassen.

2. Leistungszufuhr (1) nach Anspruch 1,
   wobei die Steuerschaltung (106) ferner konfiguriert ist, um einen Referenzwert (109) der Ausgangsspannung (107) der Leistungszufuhr (1) in Abhängigkeit von einer geschätzten Ausgangsleistung der Leistungszufuhr (1) anzupassen.

3. Leistungszufuhr (1) nach Anspruch 2,
   wobei die Steuerschaltung (106) ferner konfiguriert ist, um die Ausgangsleistung der Leistungszufuhr (1) in Abhängigkeit von einem Istwert der Ausgangsspannung (107, $V_{out}$) der Leistungszufuhr (1) und einem Istwert eines Eingangsstroms der Leistungszufuhr (1) zu schätzen.

4. Leistungszufuhr (1) nach Anspruch 3,
   wobei die Steuerschaltung (106) konfiguriert ist, um den Istwert der Ausgangsspannung (107, $V_{out}$) der Leistungszufuhr (1) gemäß einer ersten Messung (C) auf der Primärseite (102) zu messen.

5. Leistungszufuhr (1) nach Anspruch 4,

   die Primärseite (102) ferner umfassend eine Reihenschaltung einer Diode (110) und eines Kondensators (111), die parallel zu dem Schalter (105) angeordnet ist; und
   einen Tiefpassfilter (112), der stromabwärts eines Mittelpunktes zwischen der Diode (110) und dem Kondensator (111) und stromaufwärts der Steuerschaltung (106) geschaltet ist;
   wobei die Steuerschaltung (106) ferner konfiguriert ist, um eine durchschnittliche Spitzenspannung zu messen, die über den Kondensator (111) hinweg abfällt, wenn sich der Schalter (105) in einem nicht leitenden Zustand befindet, wobei die durchschnittliche Spitzenspannung den Istwert der Ausgangsspannung (107, $V_{out}$) der Leistungszufuhr (1) angibt.

6. Leistungszufuhr (1) nach einem der Ansprüche 3 bis 5,
   wobei die Steuerschaltung (106) konfiguriert ist, um den Istwert des Eingangsstroms der Leistungszufuhr (1) gemäß einer zweiten Messung (B) auf der Primärseite (102) zu messen.

7. Leistungszufuhr (1) nach Anspruch 6,

   die Primärseite (102) ferner umfassend
   einen Nebenschluss (113), der stromabwärts von dem Schalter (105) geschaltet ist; und
   wobei die Steuerschaltung (106) ferner konfiguriert ist, um
   eine Spannung zu messen, die über den Nebenschluss (113) hinweg abfällt, wenn sich der Schalter (105) in einem leitenden Zustand befindet, wobei die Spannung den Istwert des Ausgangsstroms (108, $I_{out}$) der Leistungszufuhr (1) angibt.

8. Leistungszufuhr (1) nach Anspruch 7,
   wobei die Steuerschaltung (106) konfiguriert ist, um einen Nulldurchgang des Eingangsstroms der Leistungszufuhr (1) gemäß einer dritten Messung (D) auf der Primärseite (102) zu messen.

9. Leistungszufuhr (1) nach Anspruch 8,

   wobei die Steuerschaltung (106) ferner konfiguriert ist, um
   einen Nulldurchgang der Spannung zu messen, die über den Nebenschluss (113) hinweg abfällt, wenn sich der Schalter (105) in einem leitenden Zustand befindet, wobei der Nulldurchgang der Spannung den Nulldurchgang des Eingangsstroms der Leistungszufuhr (1) angibt.

10. Leistungszufuhr (1) nach Anspruch 9,

    wobei die Steuerschaltung (106) ferner konfiguriert ist, um
    einen Übergang eines Leitungsmodus des Schalters (105) zwischen dem ersten Leitungsmodus und dem zweiten Leitungsmodus in Abhängigkeit von der geschätzten Ausgangsleistung der Leistungszufuhr (1) durchzuführen.

11. Leistungszufuhr (1) nach Anspruch 10,

wobei die Steuerschaltung (106) ferner konfiguriert ist, um
eine Spitzenamplitude eines primärseitigen Stroms anzupassen, der durch den Schalter (105) fließt, wenn sich der Schalter (105) in einem leitenden Zustand befindet, in Abhängigkeit von der geschätzten Ausgangsleistung der Leistungszufuhr (1), wobei die Spitzenamplitude den durchschnittlichen Ausgangsstrom (108, $I_{out}$) der Leistungszufuhr (1) angibt.

12. Leistungszufuhr (1) nach einem der vorstehenden Ansprüche, der isolierte Leistungswandler (101) umfassend einen Sperrwandler und/oder der Schalter (105) umfassend einen MOSFET.

13. Leistungszufuhr (1) nach einem der vorstehenden Ansprüche, der erste Leitungsmodus umfassend einen diskontinuierlichen Leitungsmodus (DCM) und der zweite Leitungsmodus umfassend einen Grenz-/Abgrenzungsleitungsmodus (BCM).

14. Leistungszufuhr (1) nach einem der vorstehenden Ansprüche,

die Sekundärseite (103) ferner umfassend einen Überstromschutz (114, OCP) zum Begrenzen des Ausgangsstroms (108) auf einen Nennwert im Falle eines Kurzschlusses der Ausgangsanschlüsse (104), und/oder einen Überspannungsschutz (115, OVP).

**Revendications**

1. Alimentation électrique (1) pour un bus de commande d'éclairage (2), comprenant

un convertisseur de puissance isolé (101) configuré pour fournir de la puissance par induction d'un côté primaire (102) du convertisseur à un côté secondaire (103) du convertisseur (101) ;
le côté secondaire (103) comprenant des bornes de sortie (104) pouvant être connectées au bus de commande d'éclairage (2) ;
le côté primaire (102) comprenant
un commutateur (105) ; et
un circuit de commande (106)
configuré pour commander, dans un premier mode de conduction du commutateur (105), un rapport cyclique du commutateur (105) en fonction d'une variation d'une tension de sortie (107) de l'alimentation électrique (1) mesurée sur le côté primaire (102), et

configuré pour ajuster, dans un second mode de conduction du commutateur (105), une durée d'un cycle de commutation du commutateur (105) en fonction d'une variation d'un courant de sortie moyen (108) de l'alimentation électrique (1) mesuré sur le côté primaire (102).

2. Alimentation électrique (1) selon la revendication 1, le circuit de commande (106) étant en outre configuré pour ajuster une valeur de référence (109) de la tension de sortie (107) de l'alimentation électrique (1) en fonction d'une puissance de sortie estimée de l'alimentation électrique (1).

3. Alimentation électrique (1) selon la revendication 2, le circuit de commande (106) étant en outre configuré pour estimer la puissance de sortie de l'alimentation électrique (1) en fonction d'une valeur réelle de la tension de sortie (107, $V_{out}$) de l'alimentation électrique (1) et d'une valeur réelle d'un courant d'entrée de l'alimentation électrique (1).

4. Alimentation électrique (1) selon la revendication 3, le circuit de commande (106) étant configuré pour mesurer la valeur réelle de la tension de sortie (107, $V_{out}$) de l'alimentation électrique (1) conformément à une première mesure (C) sur le côté primaire (102).

5. Alimentation électrique (1) selon la revendication 4,

le côté primaire (102) comprenant en outre une connexion en série d'une diode (110) et d'un condensateur (111) agencés en parallèle au commutateur (105) ; et
un filtre passe-bas (112) connecté en aval d'un point milieu entre la diode (110) et le condensateur (111) et en amont du circuit de commande (106) ;
le circuit de commande (106) étant en outre configuré pour mesurer une chute de tension de crête moyenne aux bornes du condensateur (111) lorsque le commutateur (105) est dans un état non conducteur, la tension de crête moyenne indiquant la valeur réelle de la tension de sortie (107, $V_{out}$) de l'alimentation électrique (1).

6. Alimentation (1) selon l'une quelconque des revendications 3 à 5, le circuit de commande (106) étant configuré pour mesurer la valeur réelle du courant d'entrée de l'alimentation électrique (1) conformément à une deuxième mesure (B) sur le côté primaire (102).

7. Alimentation électrique (1) selon la revendication 6,

le côté primaire (102) comprenant en outre un shunt (113) connecté en aval du commutateur (105) ; et

le circuit de commande (106) étant en outre configuré pour

mesurer une chute de tension aux bornes du shunt (113) lorsque le commutateur (105) est dans un état conducteur, la tension indiquant la valeur réelle du courant de sortie (108, $I_{out}$) de l'alimentation électrique (1).

8. Alimentation électrique (1) selon la revendication 7, le circuit de commande (106) étant configuré pour mesurer un passage par zéro du courant d'entrée de l'alimentation électrique (1) conformément à une troisième mesure (D) sur le côté primaire (102).

9. Alimentation électrique (1) selon la revendication 8,

le circuit de commande (106) étant en outre configuré pour

mesurer un passage par zéro de la chute de tension aux bornes du shunt (113) lorsque le commutateur (105) est dans un état conducteur, le passage par zéro de la tension indiquant le passage par zéro du courant d'entrée de l'alimentation électrique (1).

10. Alimentation électrique (1) selon la revendication 9,

le circuit de commande (106) étant en outre configuré pour

effectuer une transition d'un mode de conduction du commutateur (105) entre le premier mode de conduction et le second mode de conduction en fonction de la puissance de sortie estimée de l'alimentation électrique (1).

11. Alimentation électrique (1) selon la revendication 10,

le circuit de commande (106) étant en outre configuré pour

ajuster une amplitude de crête d'un courant côté primaire traversant le commutateur (105) lorsque le commutateur (105) est dans un état conducteur en fonction de la puissance de sortie estimée de l'alimentation électrique (1), l'amplitude de crête indiquant le courant de sortie moyen (108, $I_{out}$) de l'alimentation électrique (1).

12. Alimentation électrique (1) selon l'une quelconque des revendications précédentes, le convertisseur de puissance isolé (101) comprenant un convertisseur indirect, et/ou le commutateur (105) comprenant un MOSFET.

13. Alimentation électrique (1) selon l'une quelconque des revendications précédentes, le premier mode de conduction comprenant un mode de conduction discontinu (DCM), et le second mode de conduction comprenant un mode de conduction limite/frontière (BCM).

14. Alimentation électrique (1) selon l'une quelconque des revendications précédentes,

le côté secondaire (103) comprenant en outre une protection contre les surintensités (114, OCP) pour limiter le courant de sortie (108) à une valeur nominale en cas de court-circuit des bornes de sortie (104), et/ou
une protection contre les surtensions (115, OVP).

FIG. 1

**EP 4 060 887 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100002480 A1
- US 2013063039 A1